# EUROPEAN PATENT APPLICATION

(11) **EP 2 000 395 A1**
(43) Date of publication of application: **10.12.2008**
(21) Application number: 07425804.7
(22) Date of filing: 18.12.2007
(51) Int. Cl.: B62J 17/04

(54) **Up & down windscreen for scooter**

(30) Priority: 08.06.2007 IT FI20070129
(71) Applicant: Pecchiai Eraldo, Sesto Fiorentino (Florencia) (IT)
(72) Inventor: Pecchiai Eraldo, Sesto Fiorentino (Florencia) (IT)

(57) **Abstract**

Fold-away windscreen for scooter, stowable inside a space behind the shield via an automatic movement (pneumatic or electric).

This system involves fan-type closing of the windscreen's side projections (hand guards); this means the windscreen takes up less space and can be stowed behind the scooter's front shield, thus eliminating the need to dismount it and put it away when it is not used. The windscreen can thus be transported and used when certain conditions present themselves without using special tools.

## Description

Fold-away windscreen for scooter, stowable inside a space behind the shield via an automatic movement (pneumatic or electric).

This system involves fan-type closing of the windscreen's side projections (hand guards); this means the windscreen takes up less space and can be stowed behind the scooter's front shield, thus eliminating the need to dismount it and put it away when it is not used. The windscreen can thus be transported and used when certain conditions present themselves without using special tools.

The windscreen is designed to provide protection from certain weather conditions - rain, damp and cold temperatures, but at the same time this accessory can be unsuitable or extremely dangerous in other conditions.
- In strong winds the windscreen makes the vehicle extremely unstable, putting the safety of the driver and everyone around him at risk.
- If the vehicle is parked in windy conditions, the accessory puts the vehicle's stability at risk, meaning that it may fall over, causing material damage and putting at risk the safety of persons in the immediate vicinity.
- On fast stretches of road (motorways, dual carriageways), the displacement of air caused by heavy vehicles overtaking or approaching the vehicle creates a "sail" effect comparable to that experienced in windy atmospheric conditions, with a similar adverse effect on its stability.
- The windscreen can be extremely annoying and dangerous at certain times of the day when the sun is low in the sky (dawn and dusk). In such conditions the reflection of solar rays hitting the windscreen make vision difficult or practically blinding, creating a not insignificant danger.
- In foggy conditions the deposition of water droplets on the windscreen makes vision difficult, with the obvious dangers this creates.
- At sustained high speeds on fast roads (motorways, dual carriageways), the windscreen creates significant resistance to air penetration, notably worsening the vehicle's CX, significantly undermining the vehicle's performance and fuel consumption.

In the aforementioned circumstances it would be necessary to dismount the windscreen, which in some cases is difficult or even impossible - such operations require special tools and take up a lot of time. Also, once dismounted, standard windscreens on the market are not easy to transport and then require a place to be stored (home, garage, etc)
the next time the windscreen is of use it has to be remounted. This operation once again requires use of the aforementioned tools and again takes up a lot of time.
Furthermore, if the place of storage is not near to the vehicle, it is not convenient to go and pick it up or to remount it, forcing the unfortunate rider to go without the said windscreen with the obvious discomfort this supposes.

With the system for which the patent is requested, the windscreen is always on the vehicle, can easily be used or stored as the driver desires, in no time at all, without employing special tools or physical effort, adapting the vehicle to meteorological and atmospheric conditions or to his own personal preferences.
- **Fig. "A" - "A-1":** the windscreen is in the hidden position behind the scooter's shield with the hand guards closed. Only the top part projects from the shield, acting as a deflector.
- **Fig. "B":** the scooter's front shield is folded forward, remaining hinged at the base at point "H", by means of an automatic electric movement.
- **Fig. "C" - "C-1" :** the shield remains open and the windscreen is raised by means of an automatic system (electrical motor with toothed wheel and rack, or pneumatic system) following the runners "W"; the 2 hand guards remain closed up to the area indicated "Q" so as not to interfere with the shield.
- **Fig. "D" - "D-1 ":** the shield remains open and the windscreen continues to rise by means of an automatic system: the 2 hand guards pivoted at points "X" fan out following with pivots "Y" the runners "J".
- **Fig. "E":** the windscreen and hand guards have reached their positions of use (max height and length); the shield closes back with an automatic movement. The windscreen remains hinged at pivots "X" and "Y".

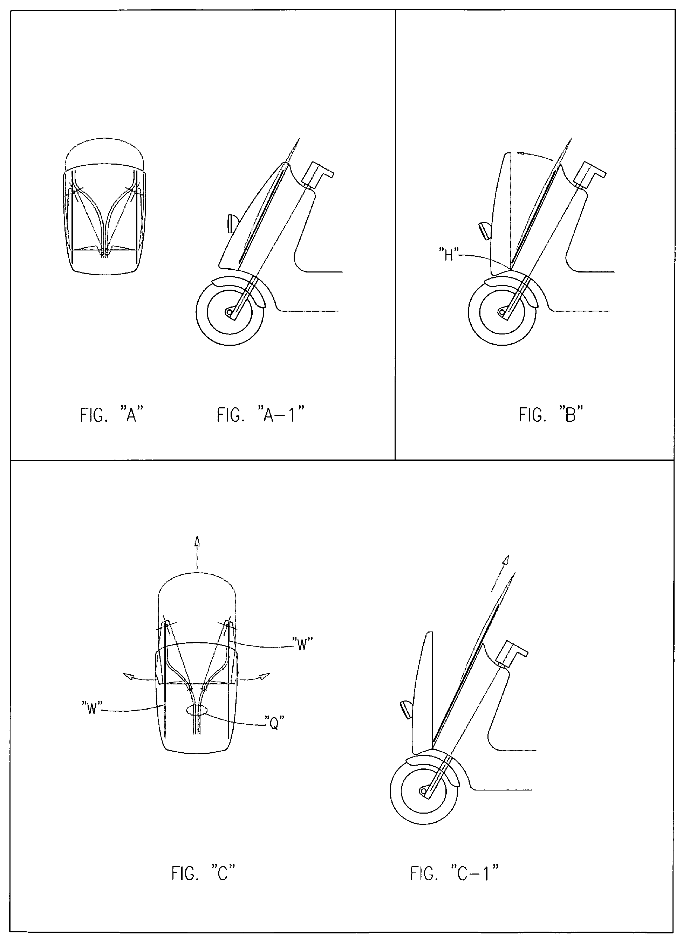

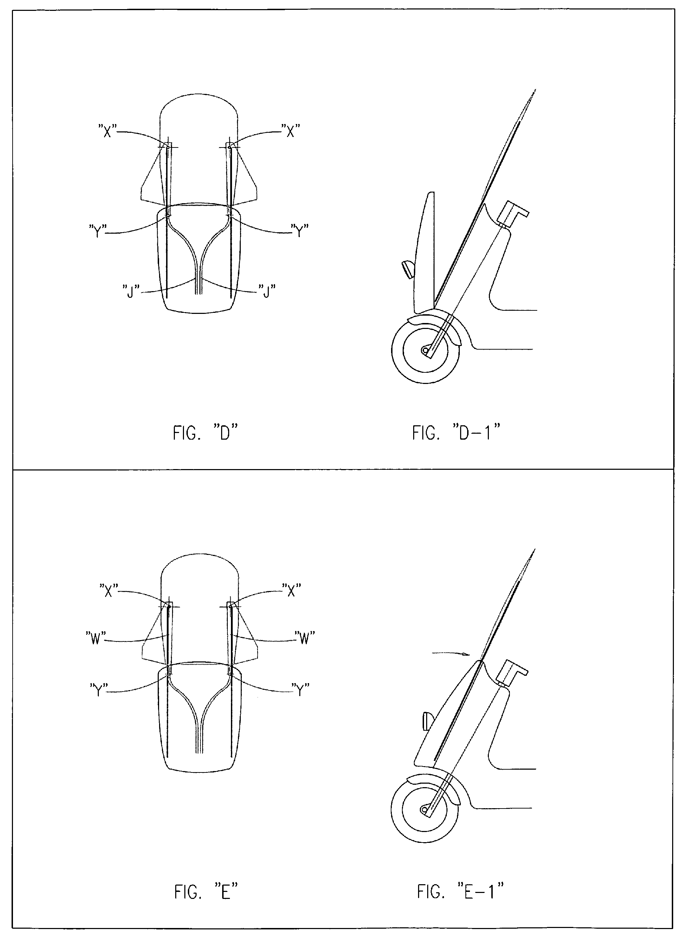

## Claims

1. Fold-away windscreen for scooter, stowable inside a space behind the shield by means of an automatic pneumatic or electric-type movement. The system provides fan-type closing (folding away) of the side projections (hand guards) so as to minimise the overall dimensions. The movement involves the front shield, which is hinged to the base so that it can be folded forwards (opening phase) or backwards (closing phase) by means of an electric motor with a toothed wheel and rack, allowing the windshield to rise and the side projections (hand guards) to open out along runners.

2. Windshield according to claims 1 **characterised by** the fact that the shield's opening and closing movement is provided by a hinge placed at its base, actuated by the electric motor.

3. Windscreen according to claims 1 **characterised by** the fact that the windscreen goes up or down by means of a rack and pinion - toothed wheel system fitted onto its electric motor or pneumatic system.

4. Windscreen according to claims 1 and 3 **characterised by** the movement claimed in point 3, assisted by runners.

5. Windscreen according to claims 1, 3 and 4 **characterised by** the fact that the side projections (hand guards) move as a result of the movement of the windscreen: closing in the Down phase, opening in the Up phase.

6. Windscreen according to claims 1, 3, 4 and 5 **characterised by** the fact that the movement of the side projections is assisted by runners.

7. Fold-away windscreen for scooter according to one or several of the above claims and according to that amply described and illustrated in the specified purposes.
